(19) Europäisches Patentamt
European Patent Office
Office européen des brevets

(11) **EP 2 874 039 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(51) Int Cl.:
*G05D 23/19* *(2006.01)*     *G05D 23/13* *(2006.01)*
*F24D 19/10* *(2006.01)*     *F24F 11/00* *(2006.01)*

(21) Anmeldenummer: **13193555.3**

(22) Anmeldetag: **19.11.2013**

(54) **Steuerverfahren für ein Wärmeübertragungssystem sowie ein solches Wärmeübertragungssystem**

Control method for a heat transfer system and heat transfer system

Procédé de commande pour un système de transmission de chaleur et système de transmission de chaleur de ce type

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.05.2015 Patentblatt 2015/21**

(73) Patentinhaber: **Grundfos Holding A/S 8850 Bjerringbro (DK)**

(72) Erfinder:
• **Kallesøe, Carsten Skovmose 8800 Viborg (DK)**
• **Nielsen, Brian Kongsgaard 8800 Viborg (DK)**

(74) Vertreter: **Patentanwälte Vollmann & Hemmer Wallstraße 33a 23560 Lübeck (DE)**

(56) Entgegenhaltungen:
**EP-A1- 0 197 836    GB-A- 2 068 601**

**Beschreibung**

Die Erfindung betrifft ein Steuerverfahren für ein Wärmeübertragungssystem sowie ein solches Wärmeübertragungssystem.

Es sind Wärmeübertragungssysteme wie Mischerkreise in Heizungsanlagen bekannt, bei welchen ein Teil des Rückflusses aus einem Lastkreis dem Zufluss des Lastkreises wieder zugemischt wird, um die Temperatur im Zufluss zu senken. Hierzu sind in der Regel ein Ventil und eine Pumpe vorgesehen, wobei das Ventil, über welches die Zumischung geregelt wird, in Abhängigkeit der Temperatur im Zulauf zu dem Lastkreis geregelt wird. Unabhängig davon wird in der Regel die Pumpe im Lastkreis druckabhängig in ihrer Drehzahl geregelt. Ferner ist es auch bekannt, Wärmeübertragungssysteme mit Wärmetauschern in Heizungsanlagen einzusetzen, wobei eine Seite des Wärmetauschers mit einer Versorgungsleitung für Heizmedium und die andere Seite des Wärmetauschers mit einem Lastkreis verbunden ist. Im Lastkreis ist in der Regel eine Förderpumpe vorgesehen und in der Versorgungsleitung ein Ventil, über welches die Menge des zugeführten Heizmediums abhängig von der Temperatur im Lastkreis geregelt wird. Auch hier findet die Temperaturregelung unabhängig von der Druckregelung über die Drehzahl der Pumpe statt. Nachteilig bei diesen Systemen ist, dass dies zu einer Trägheit bei hohen Lasten sowie zu einem Oszillieren der Regelung bei Teillasten führen kann.

EP 0 197 836 A1 offenbart ein Regelgerät für eine Heizungsinstallation mit einem Mischer. Dieser Mischer wird in Abhängigkeit einer Außentemperatur und der Vorlauftemperatur ausgangsseitig des Mischers geregelt. Eine solche Temperaturregelung ist ebenfalls unabhängig von der Druckregelung, was zu den zuvor genannten Nachteilen führt.

Es ist Aufgabe der Erfindung, die Steuerung eines Wärmeübertragungssystems dahingehend zu verbessern, dass es eine in allen Betriebszuständen optimale Regelung zulässt.

Diese Aufgabe wird durch ein Steuerverfahren mit den in Anspruch 1 angegebenen Merkmalen sowie durch ein Wärmeübertragungssystem mit den in Anspruch 13 angegebenen Merkmalen gelöst. Bevorzugte Ausführungsformen ergeben sich aus den Unteransprüchen, der nachfolgenden Beschreibung sowie den beigefügten Figuren, wobei zu verstehen ist, dass einzelne offenbarte Merkmale sowohl einzeln als auch in Kombination verwirklicht werden können.

Das erfindungsgemäße Steuerverfahren ist vorgesehen für ein Wärmeübertragungssystem, beispielsweise einen Mischerkreis in einer Klima- oder Heizungsanlage oder einen Heizungskreis oder Kühlkreis mit einem darin angeordneten Wärmetauscher. Bei solchen Systemen wird Wärme von einer Versorgungsleitung bzw. einem Versorgungskreis über den Mischer oder den Wärmetauscher auf einen Lastkreis übertragen bzw. dieser gekühlt. Bei einem Wärmetauscher fließt dabei der Versorgungskreis durch eine Seite des Wärmetauschers, während der Lastkreis durch einen zweiten Strömungsweg bzw. die andere Seite des Wärmetauschers fließt. Bei einem Mischerkreis fließt ein von einem Ventil oder einer Pumpe gesteuerter Versorgungsstrom von der Versorgungsleitung in den Lastkreis und ein Teil des Stroms in dem Lastkreis wird durch Beimischung eines Teils des Rückflusses aus dem Lastkreis in die Eingangsseite des Lastkreises realisiert. Durch diese Beimischung kann die eingangsseitige Temperatur des Lastkreises eingestellt werden.

Wärmeübertragungssystemen, für welche das erfindungsgemäße Steuerverfahren vorgesehen ist, ist gemeinsam, dass das Wärmeübertragungssystem zumindest eine Versorgungsleitung bzw. einen Versorgungskreis mit wenigstens einem Lastkreis und einer Wärmeübertragungseinrichtung zwischen der Versorgungsleitung und dem wenigstens einen Lastkreis aufweisen. Die Wärmeübertragungseinrichtung weist dabei in einer ersten Ausführungsform wenigstens einen Wärmetauscher mit einem ersten Strömungsweg auf, welcher mit der Versorgungsleitung verbunden ist und mit einem zweiten Strömungsweg, welcher mit dem wenigstens einen Lastkreis verbunden ist. In einer zweiten möglichen Ausführungsform kann die Wärmeübertragungseinrichtung als Mischeinrichtung ausgebildet sein und wenigstens eine Mischleitung aufweisen, welche einen Auslass des wenigstens einen Lastkreises und einen Einlass bzw. Eingang des Lastkreises miteinander verbindet. Gleichzeitig ist der Eingang des Lastkreises mit der genannten Versorgungsleitung verbunden. Über die Mischleitung wird dem Versorgungsstrom aus der Versorgungsleitung ein Teilstrom aus dem Rückfluss bzw. Auslass des Lastkreises zugemischt, um ggf. die Temperatur des Versorgungsstroms an der Eingangsseite des Lastkreises einzustellen, z. B. zu reduzieren. Die Temperatureinstellung erfolgt dabei bevorzugt über ein Ventil.

Es ist zu verstehen, dass die Wärmeübertragungseinrichtung gemäß der Erfindung sowohl für ein Heizsystem als auch für ein Kühlsystem verwendet werden kann. In einem Heizsystem wird dem Lastkreis erwärmtes Fluid zugeführt, während in einem Kühlsystem dem Lastkreis gekühltes Fluid zugeführt wird. Bei Verwendung einer Mischeinrichtung wird durch den aus dem Rückfluss beigemischten Teilstrom in einer Heizeinrichtung die eingangsseitige Temperatur gesenkt. In einem Kühlsystem wird sie umgekehrt erhöht. Wenn nachfolgend die Erfindung am Beispiel einer Heizeinrichtung beschrieben wird, so ist zu verstehen, dass diese Merkmale entsprechend auch bei einer Kühleinrichtung verwendet werden können.

Das erfindungsgemäße Steuerverfahren für ein Wärmeübertragungssystem, wie es vorangehend beschrieben wurde, ist so ausgestaltet, dass ein Versorgungsstrom in der Versorgungsleitung in spezieller Weise eingestellt, insbesondere gesteuert bzw. geregelt wird. Die Einstellung des Versorgungsstroms erfolgt erfindungsgemäß zumindest basierend auf einem Temperatursignal und dem Durchfluss in dem Lastkreis, d. h. dem Lastdurchfluss. Das Temperatursignal ist dabei entweder eine gewünschte eingangsseitige Lasttemperatur und/oder eine tatsächliche, d. h. gemessene eingangsseitige Lasttemperatur.

Im Unterschied zum Stand der Technik, in welchem es bekannt ist, zwei unabhängige Regelungen vorzusehen, nämlich einmal eine Drehzahlregelung einer Pumpe in Abhängigkeit des Druckes bzw. einer Druckdifferenz und zusätzlich eine Regelung des Versorgungsstromes in Abhängigkeit der Temperatur an der Eingangsseite des Lastkreises ist erfindungsgemäß nun eine integrierte Regelung vorgesehen. Bei der Regelung des Versorgungsstromes wird nicht nur die Temperatur, sondern gleichzeitig der herrschende Lastdurchfluss bzw. Laststrom als Eingangsgröße verwendet. Erfindungsgemäß wird im Steuer- bzw. Regelkreis für die Lasttemperatur sowohl die Lasttemperatur bzw. ein repräsentatives Temperatursignal bzw. ein repräsentativer Temperaturwert als auch der Durchfluss im Lastkreis berücksichtigt. Dadurch kann unter Vermeidung unerwünschter Schwankungen bzw. eines unerwünschten Schwingens ein besseres Ansprechverhalten erreicht werden.

Der Versorgungsstrom bzw. Versorgungsdurchfluss wird vorzugsweise unter Verwendung einer Pumpe und/oder eines Ventils, insbesondere eines Proportionalventils eingestellt. Bei Verwendung einer Pumpe kann der Durchfluss durch Drehzahlregelung der Pumpe verändert werden. Bei Verwendung eines Ventils wird der Durchfluss durch unterschiedliche Ventilstellungen bzw. Öffnungsgrade geregelt bzw. eingestellt.

Gemäß einer bevorzugten Ausführungsform ist das Steuerverfahren so ausgebildet, dass der Versorgungsstrom in der Versorgungsleitung bzw. dem Versorgungskreis zusätzlich basierend auf einer ausgangsseitigen Lasttemperatur und/oder basierend auf einer eingangsseitigen Versorgungstemperatur eingestellt wird. Dazu werden die entsprechenden Temperaturwerte des Fluids in der Versorgungsleitung d. h. eingangsseitig vor der Wärmeübertragungseinrichtung, wie z. B. eines Wärmetauschers, oder an der Ausgangsseite des Lastkreises erfasst. Bevorzugt wird der Versorgungsstrom u. a. basierend auf einer aktuell erfassten ausgangsseitigen Lasttemperatur und/oder u. a. basierend auf einer aktuell erfassten eingangsseitigen Versorgungstemperatur eingestellt. Durch die Berücksichtigung dieser Werte kann eine Vorwärtsregelung des Versorgungsstroms erfolgen. Besonders bevorzugt wird der Einstellung des Versorgungsstroms ein Quotient aus dem Laststrom und der Differenz der eingangsseitigen Versorgungstemperatur und der ausgangsseitigen Lasttemperatur zugrundegelegt, welcher einen Übertragungsfaktor des Lastkreises darstellt. In einer vereinfachten Steuerung kann auch die Erfassung der ausgangsseitigen Lasttemperatur und/oder der eingangsseitigen Versorgungstemperatur verzichtet werden und die Einstellung des Versorgungsstroms stattdessen auf Konstanten basiert werden, welche mit der gewünschten eingangsseitigen Lasttemperatur oder einer tatsächlichen eingangsseitigen Lasttemperatur und dem Lastdurchfluss zum Einstellen des Versorgungsstromes verknüpft werden.

Bevorzugt kann der Versorgungsstrom somit zusätzlich oder alternativ basierend auf wenigstens einer Konstante eingestellt werden, welche vorzugsweise mit dem Laststrom und/oder der gewünschten eingangsseitigen Lasttemperatur verknüpft wird. Mit Hilfe einer solchen Konstante kann eine besonders einfache Steuerung ausgebildet werden, da die Zahl der zu erfassenden Temperaturwerte reduziert werden kann. Beispielsweise kann bei einer Vorwärtsregelung der Temperatur die gewünschte eingangsseitige Lasttemperatur mit einer Konstante summiert werden, um auf Grundlage dieses Signals dann unter Berücksichtigung des Laststromes den Versorgungsstrom einzustellen. Dazu kann der Versorgungsstrom beispielsweise mit einer Konstante multipliziert werden.

Besonders bevorzugt wird der Laststrom $q_S$ gemäß folgender Gleichung bestimmt:

$$ q_S = \frac{q_L}{T_{S-}T_{RS}} \cdot V $$

wobei

$q_S$ der Versorgungsstrom,
$q_L$ der Laststrom,
Ts die eingangsseitige Versorgungstemperatur,
$T_{RS}$ die ausgangsseitige Versorgungstemperatur und
V ein Steuersignal ist.

Der Quotient $\frac{q_L}{T_S - T_{RS}}$ bildet dabei einen Übertragungsfaktor der Wärme-übertragungseinrichtung. Bei dem Temperaturwert $T_{RS}$ handelt es sich um die Temperatur an der Ausgangsseite eines ersten Strömungsweges des Wärmetauschers, durch welchen der Versorgungskreis geleitet wird. In dem Fall, dass die Wärmeübertragungseinrichtung ein Mischerkreis ist bzw. eine Mischleitung aufweist, handelt es sich bei dem Temperaturwert $T_{RS}$ gleichzeitig um die ausgangsseitige Temperatur des Lastkreises. Diese ist in diesem Fall gleich der ausgangsseitigen Temperatur des Versorgungskreises bzw. der Versorgungsleitung. Das beschriebene Steuersignal V kann das Ausgangssignal eines Reglers sein oder gemäß der Gleichung $V = T_{ref} - T_R$ bestimmt werden, wobei $T_{ref}$ die gewünschte eingangsseitige Lasttemperatur und $T_R$ im Falle eines Mischerkreises die ausgangsseitige Versorgungs- und Lasttemperatur $T_{RS}$ ist. Das Steuersignal V kann auch aus dem Ausgangssignal eines Reglers und der vorgenannten Gleichung, z. B. als Summe beider Größen gebildet werden. In dem Fall, dass die Wärmeübertragungseinrichtung ein Wärmetauscher ist, handelt es sich bei dem Temperaturwert $T_R$ um die Temperatur $T_{RL}$, welche an der Ausgangsseite des Lastkreises herrscht, d. h. an der Eingangsseite des zweiten Strömungsweges des Wärmetauschers, durch welchen der Lastkreis fließt. Für den Fall, dass es sich bei der Wärmeübertragungseinrichtung um einen Mischerkreis mit einer Mischleitung handelt, ist die ausgangsseitige Lasttemperatur gleich der Temperatur, welche in der Mischleitung herrscht. Dies ist die Temperatur an der Ausgangsseite des Lastkreises, welche auch der Temperatur $T_{RS}$ an der Ausgangsseite der Versorgungsleitung bzw. des Versorgungskreises entspricht. Die Differenz $(T_{ref} - T_R)$ ist eine Temperaturmit- bzw. -Rückkoppelung (Temperatur feedforward). Auf Grundlage der so erfassten gegebenen Werte ist somit eine Vorwärtsregelung des Versorgungsstromes unter Berücksichtigung des Laststromes möglich.

Im Fall, dass zur Erzeugung bzw. Einstellung des Versorgungsstromes eine Pumpe verwendet wird, d. h. der Versorgungsstrom durch eine Pumpe eingestellt wird, wird vorzugsweise die Drehzahl n der Pumpe basierend auf der folgenden Gleichung bestimmt:

$$n = \frac{q_S}{K_{qn}}$$

wobei

as der Versorgungsstrom und
$K_{qn}$ ein zeitabhängiges Signal ist, welches vom Strömungswiderstand in der Versorgungsleitung abhängt.

Das bedeutet, der Versorgungsstrom qs wird in der vorangehend beschriebenen Weise bestimmt und anschließend durch den Faktor $K_{qn}$ dividiert, durch welchen die hydraulischen Verhältnisse in der Versorgungsleitung berücksichtigt werden. Dabei ist der Faktor $K_{qn}$ > 0. Das bedeutet durch das erfindungsgemäße Steuerverfahren kann der Pumpenversorgungsleitung eine gewünschte Drehzahl, welche proportional zum gewünschten Versorgungsstrom, vorgegeben werden.

Gemäß einer weiteren bevorzugten Ausführungsform kann zum Bestimmen der Drehzahl der Pumpe, über welche der Versorgungsstrom erzeugt bzw. eingestellt wird, oder zum Bestimmen eines Öffnungsgrades des Ventils, über welches der Versorgungsstrom eingestellt wird, ein Differenzdruck, insbesondere über der Pumpe oder über dem Ventil berücksichtigt werden. Anstelle des Differenzdruckes über der Pumpe oder über dem Ventil könnte auch ein Differenzdruck zwischen der Eingangsseite und der Ausgangsseite der Versorgungsleitung bzw. des Versorgungskreises berücksichtigt werden. So ist der Durchfluss durch ein Ventil zur Einstellung des Versorgungsstromes abhängig von der Öffnungsstellung des Ventils und dem Differenzdruck. Im Fall eines linearen Ventils ergibt sich der Versorgungsstrom als analytische Funktion, welche abhängig von der Öffnungsstellung und dem Differenzdruck ist. Im Fall eines nicht linearen Ventils kann durch Messungen ein Kennfeld ermittelt werden, welches die Abhängigkeit der Ventilöffnungsstellung vom Förderstrom und von dem Differenzdruck darstellt. Ein solches Kennfeld kann abgespeichert werden und dazu genutzt werden, die Öffnungsstellung des Ventils auf Grundlage des in der beschriebenen Weise bestimmten Versorgungsstromes und eines gemessenen Differenzdruckes einzustellen.

Anstatt in einer Steuereinrichtung, welche das beschriebene Steuerverfahren ausführt, direkt ein zum Ventilöffnungsgrad proportionales Steuersignal oder ein zu der Pumpendrehzahl proportionales Steuersignal zu erzeugen, kann auch lediglich ein für den Förderstrom proportionales Signal erzeugt werden, welches dann durch einen Durchflussregler als Eingangsgröße zur Regelung des Versorgungsstromes geführt wird. Ein solcher Durchflussregler kann mit der Steuereinrichtung in einer gemeinsamen elektronischen Steuereinrichtung integriert sein.

Gemäß einer weiteren bevorzugten Ausführungsform kann eine zusätzliche Regelung der eingangsseitigen Lasttemperatur erfolgen. Das bedeutet, unter Erfassung der tatsächlichen eingangsseitigen Lasttemperatur wird diese auf einen vorgegebenen Sollwert, nämlich die gewünschte eingangsseitige Lasttemperatur geregelt.

Gemäß eines weiteren bevorzugten Ausführungsform des erfindungsgemäßen Steuerverfahrens wird bei der Einstellung des Versorgungsstromes zusätzlich eine Übertragungsverzögerung zwischen einem Messpunkt der eingangsseitigen Lasttemperatur und der Wärmeübertragungseinrichtung durch wenigstens eine Konstante und/oder eine von dem Laststrom abhängige Funktion berücksichtigt. Dies ist von Vorteil, wenn in dem Wärmeübertragungssystem ein größerer Abstand zwischen der Wärmeübertragungseinrichtung und dem Punkt, an welchem die eingangsseitige Lasttemperatur gemessen wird, besteht. In einem solchen Wärmeübertragungssystem kann eine Veränderung des Versorgungsstromes anhand der eingangsseitigen Lasttemperatur erst erfasst werden, wenn das in der Wärmeübertragungseinrichtung in seiner Temperatur eingestellte Fluid in dem Lastkreis den Abstand zwischen der Wärmeübertragungseinrichtung und dem Punkt der Erfassung der eingangsseitigen Lasttemperatur durchlaufen hat. Je geringer dabei der Laststrom bzw. die Strömungsgeschwindigkeit im Lastkreis ist, umso länger dauert es, bis das Fluid diese Strecke zurückgelegt hat und die Verzögerung erhöht sich entsprechend. Dieses Phänomen wird als variable Transportverzögerung bezeichnet. Um unerwünschte Schwingungen bzw. Schwankungen in der Regelung bzw. Steuerung zu vermeiden, können entsprechende Konstante oder Funktionen zur Berücksichtigung dieser Verzögerung eingeführt werden. Dies gilt sowohl für den Fall, dass die Wärmeübertragungseinrichtung ein Wärmetauscher ist, als auch für den Fall, dass als Wärmeübertragungseinrichtung ein Mischerkreis Verwendung findet.

Bei einer weiteren bevorzugten Ausführungsform kann der Laststrom in dem Lastkreis über eine Lastpumpe bestimmt werden. Wenn in dem Lastkreis eine Lastpumpe zum Erzeugen des Laststromes angeordnet ist, kann aus Kennwerten der Pumpe, insbesondere aus Drehzahl und Leistung und/oder Differenzdruck, der Durchfluss bestimmt werden, welcher dem Laststrom entspricht. So kann auf einen separaten Durchflusssensor zur Bestimmung des Laststromes verzichtet werden. Alternativ kann jedoch auch ein Durchflusssensor zum Erfassen des Laststromes vorgesehen sein.

Neben dem vorangehend beschriebenen Steuerverfahren ist Gegenstand der Erfindung ein Wärmeübertragungssystem, in welchem ein solches Steuerverfahren zur Anwendung kommt. Dieses Wärmeübertragungssystem weist einen Versorgungskreis bzw. eine Versorgungsleitung, wenigstens einen Lastkreis sowohl eine Wärmeübertragungseinrichtung zwischen der Versorgungsleitung und dem wenigstens einen Lastkreis auf. Die Wärmeübertragungseinrichtung kann, wie oben beschrieben, zumindest einen Wärmetauscher aufweisen, welcher einen ersten Strömungsweg hat, welcher mit der Versorgungsleitung verbunden ist bzw. durch welchen der Versorgungskreis verläuft. Darüber hinaus weist der Wärmetauscher einen zweiten Strömungsweg auf, welcher mit dem wenigstens einen Lastkreis verbunden ist. D. h. der Lastkreis verläuft durch den zweiten Strömungsweg. So kann Wärme von dem Versorgungskreis bzw. dem Fluid in der Versorgungsleitung auf das Fluid in dem Lastkreis übertragen werden bzw. ein Fluid in dem Lastkreis im Falle einer Kühleinrichtung gekühlt werden. Alternativ kann die Wärmeübertragungseinrichtung als Mischeinrichtung ausgebildet sein und eine Mischleitung aufweisen, welche die Ausgangsseite des wenigstens einen Lastkreises mit der Eingangsseite des Lastkreises verbindet. Gleichzeitig ist dabei die Eingangsseite des Lastkreises mit der Versorgungsleitung verbunden, sodass dem aus der Versorgungsleitung zugeführten Fluid Fluid aus dem Rücklauf bzw. der Ausgangsseite des Lastkreises zugemischt werden kann, um z. B. die Temperatur des Fluids in der Versorgungsleitung an der Eingangsseite des Lastkreises zu verringern. Die Fluidströmungen aus der Versorgungsleitung und der Mischleitung können über zumindest ein Ventil eingestellt werden.

Darüber hinaus weist das erfindungsgemäße Wärmeübertragungssystem zumindest eine Versorgungsstromeinstelleinrichtung auf, über welche der Versorgungsstrom eingestellt bzw. reguliert werden kann. Die Versorgungsstromeinstelleinrichtung weist erfindungsgemäß eine Steuereinrichtung auf, welche so ausgebildet ist, dass sie ein Verfahren gemäß der vorangehenden Beschreibung ausführen kann, um über die Versorgungsstromeinstelleinrichtung den Versorgungsstrom einzustellen bzw. zu regulieren. Die Versorgungsstromeinstelleinrichtung kann bevorzugt eine Pumpe aufweisen, deren Drehzahl durch die Steuereinrichtung eingestellt wird. Alternativ oder zusätzlich kann die Versorgungsstromeinstelleinrichtung ein Ventil aufweisen, dessen Öffnung bzw. Öffnungsgrad durch die Steuereinrichtung eingestellt wird.

Weiter bevorzugt ist eine Sensoreinrichtung zum Erfassen einer eingangsseitigen Lasttemperatur des Lastkreises und eine Sensoreinrichtung zum Erfassen eines Laststromes in dem Lastkreis vorgesehen. Die Sensoreinrichtung zum Erfassen der eingangsseitigen Lasttemperatur kann ein Temperaturfühler an der Eingangsseite des Lastkreises sein. Die Sensoreinrichtung zum Erfassen eines Laststromes kann ein in dem Lastkreis angeordneter Durchflussmesser sein. Alternativ kann der Laststrom, wie oben beschrieben, auch über eine Pumpe in dem Lastkreis, welche den Laststrom erzeugt, erfasst werden. Ferner ist vorzugsweise in dem Wärmeübertragungssystem eine Temperaturerfassungseinrichtung zum Erfassen einer ausgangsseitigen Lasttemperatur und/oder eine Temperaturerfassungseinrichtung zum Erfassen einer eingangsseitigen Versorgungstemperatur vorhanden. Hierzu können ebenfalls Temperatursensoren vorgesehen sein, welche die ausgangsseitige Lasttemperatur und/oder die eingangsseitige Versorgungstemperatur als Eingangsgrößen für die erfindungsgemäße Stellung des Versorgungsstromes gemäß dem oben beschriebenen Verfahren liefern, welches in der Steuereinrichtung eines erfindungsgemäßen Wärmeübertragungssystems zur Anwendung kommt.

Nachfolgend wird die Erfindung beispielhaft anhand der beigefügten Figuren beschrieben. In diesen zeigt:

Fig. 1a      schematisch ein erfindungsgemäßes Wärmeübertragungssystem mit einem Mischerkreis,

Fig. 1b      schematisch ein erfindungsgemäßes Wärmeübertragungssystem mit einem Wärmetauscher,

Fig. 2      schematisch ein Kennfeld, welches den Zusammenhang zwischen einem zur Ventilöffnung proportionalen Signal und dem Differenzdruck über dem Ventil sowie dem Durchfluss darstellt,

Fig. 3      schematisch die Steuerung eines Ventils zum Einstellen des Versorgungsstromes gemäß einer ersten Ausführungsform der Erfindung,

Fig. 4      schematisch eine Drehzahlsteuerung einer Pumpe zum Einstellen eines Versorgungsstromes gemäß einer weiteren Ausführungsform der Erfindung,

Fig. 5        schematisch die Regelung des Versorgungsstroms mit Hilfe eines separaten Durchflussreglers,

Fig. 6        schematisch eine vereinfachte Steuerung eines Ventils zum Einstellen des Versorgungsstromes,

Fig. 7a-7f    schematisch sechs verschiedene Wärmeübertragungssysteme gemäß der Erfindung mit Mischerkreisen und verschiedenen Sensor- und Aktuatorelementen,

Fig. 8        schematisch die Steuerung eines Ventils zum Einstellen des Versorgungsstromes unter Verwendung einer Regelung der eingangsseitigen Lasttemperatur,

Fig. 9        schematisch eine Steuerung gemäß Fig. 8 mit einer Kompensation einer auftretenden Transportverzögerung,

Fig. 10       eine Variante der Steuerung gemäß Fig. 9, und

Fig. 11       eine vereinfachte Variante der Steuerung gemäß Fig. 10.

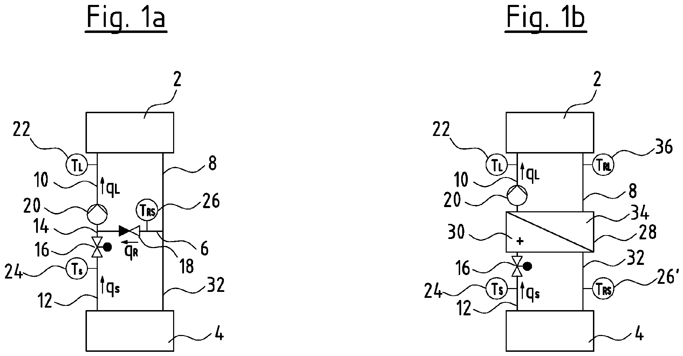

Das in Fig. 1a gezeigte Wärmeübertragungssystem weist einen Lastkreis 2 sowie eine Versorgung bzw. einen Versorgungskreis 4 auf. Zwischen der Versorgung 4 und dem Lastkreis 2 ist eine Wärmeübertragungseinrichtung in Form eines Mischerkreises mit einer Mischleitung 6 angeordnet. Die Mischleitung 6 verbindet einen Auslass 8 mit einem Eingang 10 des Lastkreises 2. Der Eingang 10 ist gleichzeitig mit einer von der Versorgung 4 kommenden Versorgungsleitung 12 verbunden. Die Versorgungsleitung 12 und die Mischleitung 6 treffen sich in einem Mischpunkt 14. In diesem Mischpunkt 14 werden somit die Fluidströmung aus der Versorgungsleitung und die Fluidströmung aus der Mischleitung 6 gemischt und gelangen gemeinsam zu dem Eingang 10 des Lastkreises 2. Um das Mischungsverhältnis des Versorgungsstroms $q_S$ in der Versorgungsleitung 12 sowie des Mischstromes $q_R$ in der Mischleitung 6 einstellen zu können, ist in der Versorgungsleitung 12 ein Ventil 16 angeordnet, welches in seinem Öffnungsgrad einstellbar ist, d. h. insbesondere als motorgetriebenes Proportionalventil ausgebildet sein kann. In der Mischleitung 6 ist ein Rückschlagventil 18 angeordnet. Die Summen der Ströme des Versorgungsstroms $q_S$ und des Mischstromes $q_R$ bildet den Laststrom $q_L$ im Lastkreis 2. Dieser Laststrom $q_L$ wird durch eine Lastpumpe 20 erzeugt. Zusätzlich sind in dem gezeigten System drei Temperatursensoren 22, 24 und 26 angeordnet, von welchen der Temperatursensor 22 die eingangsseitige Lasttemperatur $T_L$, welche das Fluid am Eingang 10 des Lastkreises 2 aufweist, und der Temperatursensor 24 die Versorgungstemperatur Ts in der Versorgungsleitung 12 erfasst. Die Versorgungstemperatur Ts ist die Temperatur des Fluids, welches durch die Versorgungsleitung 12 strömt. Der dritte Temperatursensor 26 erfasst in der Mischleitung 6 die Temperatur des aus dem Lastkreis 2 austretenden Fluids, d. h. die ausgangsseitige Lasttemperatur $T_{RS}$.

Fig. 1b zeigt eine zweite Variante eines erfindungsgemäßen Wärmeübertragungssystems, wobei gleiche Bauteile mit denselben Bezugszeichen wie in Fig. 1a bezeichnet sind. Im Unterschied zu dem Ausführungsbeispiel gemäß Fig. 1a weist das Wärmeübertragungssystem gemäß Fig. 1b als Wärmeübertragungseinrichtung keine Mischeinrichtung, sondern einen Wärmetauscher 28 auf. Durch einen ersten Strömungsweg 30 des Wärmetauschers 28 fließt das Fluid des Versorgungskreises bzw. der Versorgung 4. Dabei wird der Versorgungsstrom qs, d. h. der Durchfluss durch den Versorgungskreis über das Ventil 16, welches in der vorangehend beschriebenen Weise ausgestaltet sein kann, eingestellt. Über den Temperatursensor 24 wird die Versorgungstemperatur Ts im Zufluss zu dem Wärmetauscher 28 erfasst. Über den Temperatursensor 26' wird die ausgangsseitige Versorgungstemperatur $T_{RS}$ erfasst. In dem Ausführungsbeispiel gemäß Fig. 1a entspricht die von dem Temperatursensor 26 erfasste ausgangsseitige Lasttemperatur ebenfalls der ausgangsseitigen Versorgungstemperatur $T_{RS}$, da dieselbe Temperatur im Rücklauf 32 des Versorgungskreises herrscht.

Der Wärmetauscher 28 in dem Ausführungsbeispiel gemäß Fig. 1b weist einen zweiten Strömungsweg 34 auf, durch welchen das Fluid des Lastkreises 2 strömt. Das Fluid wird dabei durch die Lastpumpe 20 gefördert. In dem hier gezeigten Beispiel ist im Auslass 8 des Lastkreises 2 ein weiterer Temperatursensor 36 angeordnet, welcher die Temperatur des Fluids im Auslass 8, d. h. die ausgangsseitige Lasttemperatur $T_{RL}$ erfasst. Das Fluid strömt über den Auslass 8 in den ersten Strömungsweg des Wärmetauschers 34 und wird dort über das Fluid im Versorgungskreis 4 erwärmt und strömt dann durch den Eingang 10 wieder in den Lastkreis 2.

Für die beiden vorangehend beschriebenen Varianten eines Wärmeübertragungssystems kommt erfindungsgemäß ein neuartiges Steuerverfahren zur Anwendung, bei welchem der Versorgungsstrom qs in der Versorgungsleitung 12 basierend auf einer gewünschten eingangsseitigen Lasttemperatur $T_{ref}$, einer tatsächlichen eingangsseitigen Lasttemperatur $T_L$, welche in dem Lastkreis 2 bzw. in dessen Eingang 10 von dem Temperatursensor 22 erfasst wird, sowie dem Laststrom $q_L$ eingestellt wird. Der Laststrom $q_L$ wird in diesem Beispiel über die Lastpumpe 20 erfasst. Es handelt sich bei dieser um ein Pumpenaggregat, welches den Förderstrom erfassen, bzw. ermitteln und an eine Steuereinrichtung zur weiteren Verarbeitung ausgeben kann.

Für die Anordnung gemäß Fig. 1a ergibt sich folgende Gleichgewichtsgleichung für die Temperaturen und Förderströme:

$$T_L = T_{RS} + \frac{q_S}{q_L}\,(T_S - T_{RS})$$

Für die Anordnung gemäß Fig. 1b ergibt sich entsprechend folgende Gleichgewichtsgleichung:

$$T_L = T_{RL} + \frac{q_S}{q_L}\,(T_S - T_{RS})$$

Aus diesen Gleichgewichtsgleichungen lässt sich der Förderstrom wie folgt ermitteln:

$$q_S = \frac{q_L}{T_S - T_{RS}} \cdot V$$

Wobei V ein Steuersignal sein kann oder ebenfalls in der nachfolgenden Weise aus den gemessenen Temperaturwerten berechnet werden kann. Wenn in den oben genannten Gleichgewichtsgleichungen die Temperatur $T_L$, d. h. die eingangsseitige Lasttemperatur durch die gewünschte Lasttemperatur, d. h. den Ziel- bzw. Referenzwert für die Lasttemperatur $T_{ref}$ ersetzt wird, ergibt sich für das Ausführungsbeispiel gemäß Fig. 1a:

$$V = T_{ref} - T_{RS}$$

und für das Ausführungsbeispiel in Fig. 1 b:

$$V = T_{ref} - T_{RL}.$$

Um nachfolgend beide Ausführungsbeispiele gemeinsam beschreiben zu können, wird die Temperaturvariable $T_R$ eingeführt, welche im Falle der Verwendung eines Mischerkreises der Temperatur $T_{RS}$ entspricht, welche die ausgangsseitige Lasttemperatur und gleichzeitig die Temperatur im Rücklauf 32 des Versorgungskreises 4 ist. In dem Fall, dass ein Wärmetauscher verwendet wird, entspricht $T_R$ der ausgangsseitigen Lasttemperatur $T_{RL}$ am Auslass 8 des Lastkreises 2.

($T_{ref}$ - $T_R$) bildet einen Feedforward-Faktor für eine Feedforward-Regelung bzw. Vorwärtsregelung. Der Ausdruck $\frac{q_L}{T_S - T_{RS}}$ bildet den inversen Verstärkungsfaktor des Mischerkreises bzw. Wärmetauschers. Auf Grundlage dieser Faktoren kann gemäß der oben genannten Gleichung der Versorgungsstrom qs in Abhängigkeit des Laststroms $q_L$ und der erfassten Temperaturen, bzw. vorgegebenen Temperaturen eingestellt werden, sodass insgesamt eine genauere, schnellere und weniger zum oszillieren neigende Regelung erreicht werden kann.

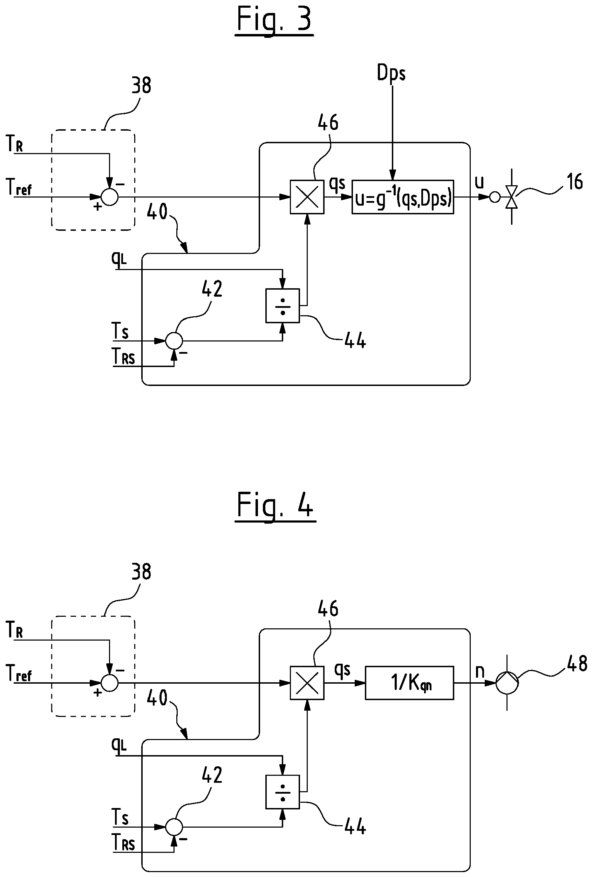

Fig. 3 zeigt schematisch ein Beispiel der Steuerung bzw. Regelung unter Verwendung eines Ventils 16 in der Versorgungsleitung 12. Der Feedforward-Faktor wird in der Feedforward-Bestimmung 38 durch Subtraktion des Temperaturwertes $T_R$ ($T_{RS}$ oder $T_{RL}$, je nachdem, ob es sich um einen Wärmetauscher oder Mischer handelt) von der gewünschten eingangsseitigen Lasttemperatur $T_{ref}$ gebildet. In der Verstärkungsfaktorbestimmung 40 wird der Temperaturwert $T_{RS}$, welcher von dem Temperatursensor 26 oder 26' im Rücklauf 32 der Versorgung 4 bestimmt wird, von der Versorgungstemperatur Ts, welche in der Versorgungsleitung 12 von dem Temperatursensor 24 erfasst wird, substrahiert. In dem Dividierer 44 wird anschließend der von der Lastpumpe 20 ausgegebene Laststrom $q_L$ durch das Ausgangssignal des Subrahierers 42 dividiert. Das so erzeugte Signal wird anschließend mit dem Feedforward-Faktor in dem Multiplizierer 46 multipliziert, was den gewünschten Laststrom qs ergibt.

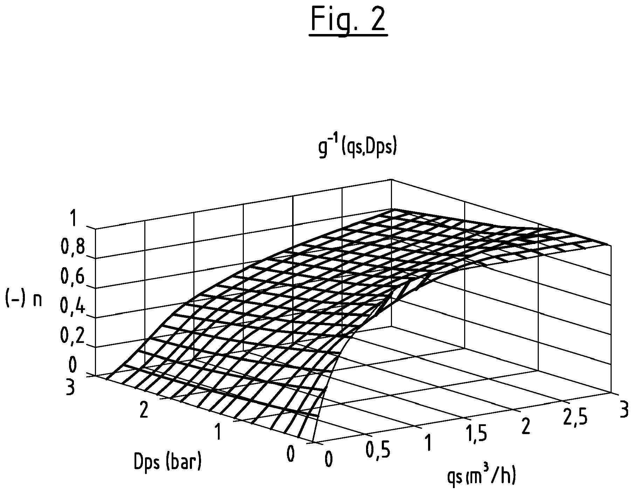

Wenn nun in der Versorgungsleitung 12 ein Ventil 16 zum Einstellen des Laststromes qs vorgesehen ist, wird ein der Ventilöffnung proportionales Signal u in dem Fall, dass es sich um ein nicht lineares Ventil handelt, beispielsweise auf Grundlage des in Fig. 2 gezeigten Kennfeldes bestimmt, wobei in die Bestimmung

$$U = g^{-1}\,(q_S, Dp_S)$$

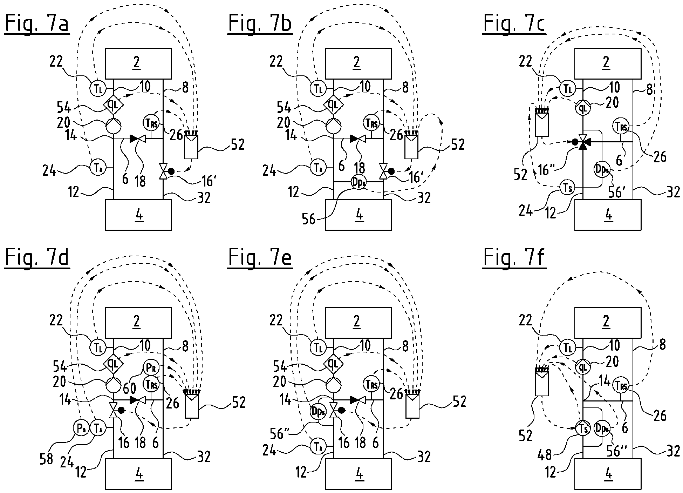

darüber hinaus der Differenzdruck Dps über dem Ventil 16 einfließt. Dieser Differenzdruck kann, wie später anhand von Fig. 7 erläutert werden wird, bestimmt werden.

Fig. 4 zeigt die Steuerung gemäß Fig. 3 für den Fall, dass anstelle eines Ventils 16 in der Versorgungsleitung 12 eine Pumpe 48, d. h. eine Versorgungspumpe 48 zum Einsatz kommt. Für diese muss die gewünschte Drehzahl n basierend auf dem gewünschten Versorgungsstrom qs ermittelt werden. Dies erfolgt gemäß der Gleichung

$$n = \frac{q_S}{K_{qn}}$$

wobei $K_{qn}$ ein zeitabhängiges Signal ist, welches von dem Strömungswiderstand in dem Versorgungskreis 4 bzw. der Versorgung 4 abhängt.

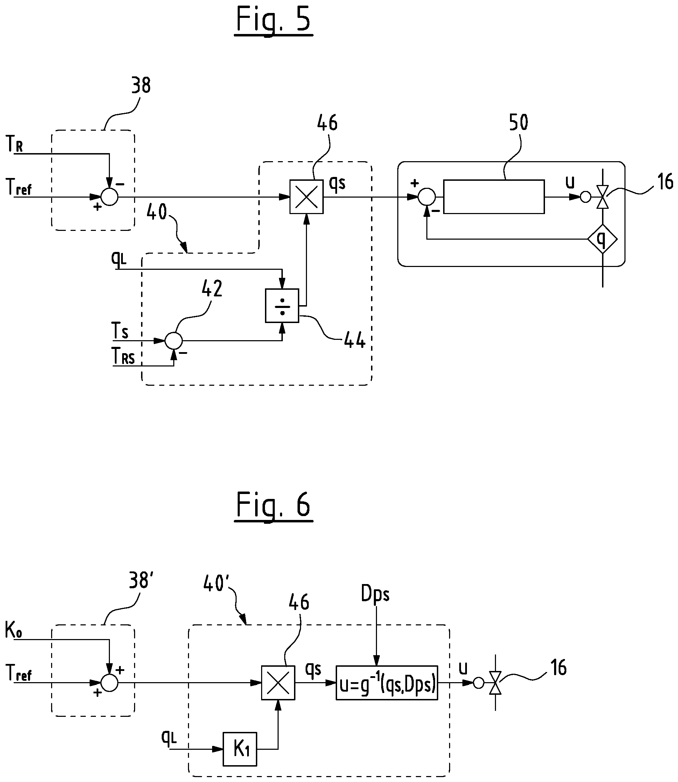

Fig. 5 zeigt eine weitere Variante der in Fig. 3 gezeigten Steuerung, bei welcher der ermittelte Versorgungsstrom qs an einen nachfolgenden Durchflussregler 50 übergeben wird, welcher den Versorgungsstrom qs durch Einstellung des Ventils 16 regelt. Für eine solche Durchflussregelung ist zusätzlich die Erfassung des Versorgungsstroms qs in der Versorgungsleitung 12 oder an anderer Stelle der Versorgung 4, beispielsweise im Rücklauf 32, erforderlich. Es ist zu verstehen, dass eine solche Durchflussregelung auch unter Verwendung einer Pumpe 48 in entsprechender Weise erfolgen könnte, wobei der Durchflussregler 50 dann nicht das Stellsignal u für das Ventil 16, sondern die Drehzahl n für die Pumpe 48 regeln würde.

Fig. 6 zeigt eine weitere Variante der Steuerung, welche einen vereinfachten Aufbau aufweist. Bei dieser Variante erfolgt die Bestimmung des Feedforward-Faktors in der Feedforward-Bestimmung 38' nicht durch Substraktion eines tatsächlich gemessenen Temperatursignals $T_R$ von der gewünschten eingangsseitigen Lasttemperatur $T_{ref}$ Vielmehr wird hier die gewünschte eingangsseitige Lasttemperatur $T_{ref}$ mit einer Konstante Ko addiert. Entsprechend wird auch der Laststrom $q_L$ lediglich mit einer Konstante $K_1$ multipliziert. Die Konstanten $K_0$ und $K_1$ sind anlagenabhängige Konstante. Diese Signale werden dann in dem Multiplizierer 46 multipliziert, um den Versorgungsstrom qs zu ermitteln. Auf dessen Grundlage wird dann anschließend, wie in dem Beispiel gemäß Fig. 3 unter Anwendung des Kennfeldes in Fig. 2 und unter Berücksichtigung des Differenzdruckes Dps, ein Stellsignal u für das Ventil 16 bestimmt. Die Verwendung von Konstanten $K_0$ und $K_1$ anstatt tatsächlich gemessener Temperaturen, ermöglicht eine vereinfachte Feedforward-Regelung.

Bezüglich der Bestimmung des Stellsignals u für das Ventil 16 aus einem Kennfeld, wie es in Fig. 1b gezeigt ist, ist zu verstehen, dass anstatt der Messung des Differenzdruckes Dps in Systemen, in denen nur geringe Druckschwankungen herrschen, auch ein fester Faktor verwendet werden kann. Für den Fall, dass es sich um ein lineares Ventil handelt, kann darüber hinaus auch auf das Kennfeld verzichtet werden und stattdessen das Stellsignal u für das Ventil 16 über eine analytische Funktion aus dem Förderstrom qs abgeleitet werden.

Die Figuren 7a - 7f zeigen Varianten des Wärmeübertragungssystems gemäß Fig. 1a mit den erforderlichen Signalflüssen zu einer Steuereinrichtung 52, welche ein Ventil bzw. Versorgungsventil 16, 16' oder eine Versorgungspumpe 48 steuert.

Die Variante in Fig. 7a unterscheidet sich von der Variante in Fig. 1a dadurch, dass das Versorgungsventil bzw. Ventil 16' nicht in der Versorgungsleitung 12, sondern im Rücklauf 32 der Versorgung 4 gelegen ist. In dem Rücklauf 32 herrscht aber derselbe Durchfluss wie in der Versorgungsleitung 12, sodass das Ventil 16, 16' wahlweise in der Versorgungsleitung 12 oder im Rücklauf 32 angeordnet werden kann, d. h. auch über das Ventil 16' im Rücklauf 32 lässt sich der Durchfluss in der Versorgungsleitung 12 einstellen. Die eingangsseitige Lasttemperatur $T_L$ wird über den Temperatursensor 22, die Versorgungstemperatur Ts, über den Temperatursensor 24 sowie die ausgangsseitige Lasttemperatur, welche der ausgangsseitigen Versorgungstemperatur $T_{RS}$ entspricht, über den Temperatursensor 26 in der Mischleitung 6 erfasst und deren Signale der Steuereinrichtung 52 zugeführt. Ferner ist in diesem Ausführungsbeispiel in dem Lastkreis 2, in diesem Beispiel im Eingang 10, ein Durchflussmesser 54 zum Bestimmen des Laststroms $q_L$ angeordnet. Alternativ kann der Laststrom $q_L$ direkt über die Lastpumpe 20 ermittelt werden, wie es oben beschrieben wurde. Auch der ermittelte Laststrom $q_L$ bzw. ein zu diesem proportionales Signal wird der Steuereinrichtung 52 zugeführt. In der Steuereinrichtung 52 läuft ein Steuerverfahren, wie es vorangehend beschrieben wurde, ab, um das Versorgungsventil 16' in gewünschter Weise zu öffnen oder zu schließen bzw. den Öffnungsgrad des Ventils 16' einzustellen. Wenn die Anordnung so gewählt wird, wie sie in Fig. 1a gezeigt ist, mit dem Ventil 16 in dem Hinlauf des Versorgungskreises 4, kann dieses Ventil 16 in entsprechender Weise mit den genannten Sensoren verknüpft sein und von der Steuereinrichtung 52 gesteuert werden.

Die Ausführungsvariante gemäß Fig. 7b unterscheidet sich von der zuvor beschriebenen Anordnung in Fig. 7a dadurch, dass zusätzlich ein Differenzdruck Dps in dem Versorgungskreis 4 zwischen dem Hinlauf, d. h. der Versorgungsleitung 12 sowie dem Rücklauf 32 bestimmt wird. Dieser Differenzdruck Dps wird ebenfalls der Steuereinrichtung 52 zugeleitet und von dieser bei der Ermittlung der Stellgröße u für das Ventil 16' beispielsweise auf Grundlage eines Kennfeldes, wie es in Fig. 2 gezeigt ist, in der oben beschriebenen Weise berücksichtigt.

Fig. 7c zeigt eine weitere Variante, bei welcher das Ventil 16", welches als Versorgungsventil dient, als Mischventil in dem Mischpunkt 14 angeordnet ist. D. h. es handelt sich um 3/2-Wegeventil, über welches die Mischung der Förderströme aus der Mischleitung 6 und der Versorgungsleitung 12 in gewünschter Weise erfolgt. Dabei ist das Ventil 16" vorzugsweise motorisch angetrieben und wird über die Steuereinrichtung 52 in der oben genannten Weise gesteuert bzw. geregelt. Dieses Mischventil 16" dient auch der Einstellung des Versorgungsstromes qs, da bei Verringerung des Mischstromes durch die Mischleitung 6 gleichzeitig der Versorgungsstrom qs durch die Versorgungsleitung 12 erhöht wird und umgekehrt. Bei dem Ausführungsbeispiel in Fig. 7c wird im Unterschied zu den Ausführungsbeispielen gemäß Figuren 7a und b wieder, wie auch in dem Ausführungsbeispiel gemäß Fig. 1a, der Laststrom $q_L$ direkt von der Lastpumpe 20 erfasst bzw. bestimmt und der Steuereinrichtung 52 zugeführt. Ferner wird über einen Differenzdrucksensor 56' der Differenzdruck Dps über dem Ventil 16" zwischen der Versorgungsleitung 12 und dem Eingang 10 des Lastkreises 2 erfasst. Der Differenzdruck Dps wird in der oben beschriebenen Weise dazu genutzt, das Stellsignal u für das Ventil 16" zu bestimmen.

Der in Fig. 7d gezeigte Aufbau entspricht dem in Fig. 1a gezeigten Aufbau mit dem Unterschied, dass hier ein Durchflusssensor 54 zum Erfassen des Laststromes $q_L$ vorhanden ist. Zusätzlich sind zwei Drucksensoren 58 und 60 vorhanden, wobei der Drucksensor 58 an der Versorgungsleitung 12 angeordnet ist und den Versorgungsdruck Ps erfasst und der Drucksensor 60 in der Mischleitung 6 angeordnet ist und den ausgangsseitigen Lastdruck $P_R$, welcher gleich dem ausgangsseitigen Druck im Rücklauf 32 der Versorgung 4 ist, erfasst. Der Drucksensor 58 kann mit dem Temperatursensor 24 zu einem Sensor integriert sein. Entsprechend kann der Temperatursensor 24 mit dem Drucksensor 60 zu einem Sensor integriert sein. Aus den Drucksignalen für den Versorgungsdruck Ps und den ausgangsseitigen Lastdruck $P_R$ kann wiederum ein Differenzdruck Dps in der Steuereinrichtung 52 gebildet werden, welcher der Bestimmung des Stellwertes u für das Ventil 16 zugrunde gelegt werden kann.

In der Variante des Wärmeübertragungssystems gemäß Fig. 7e ist im Unterschied zu der Ausführungsform gemäß Fig. 7d ein Differenzdrucksensor 56" vorgesehen, welcher direkt den Differenzdruck zwischen Ein- und Ausgangsseite des Ventils 16 erfasst und diesen Differenzdruck Dps der Steuereinrichtung 52 zuführt, wobei diese, wie beschrieben, diesen Differenzdruck zur Bestimmung des Steuersignals u für das Ventil 16 berücksichtigt.

Das Ausführungsbeispiel gemäß Fig. 7f unterscheidet sich von dem Ausführungsbeispiel gemäß Fig. 7e darin, dass anstelle eines Ventils 16 in der Versorgungsleitung 12 eine Versorgungspumpe 48 angeordnet ist, welche den Versorgungsstrom qs einstellt. Die Versorgungspumpe 48 dient gleichzeitig als Temperatursensor zum Erfassen der Versorgungstemperatur Ts und gibt diese Versorgungstemperatur Ts an die Steuereinrichtung 52 aus. Darüber hinaus ist bei diesem Ausführungsbeispiel auf das Rückschlagventil 18 verzichtet und auch auf einen Durchflussmesser 54 verzichtet. Stattdessen wird der Laststrom $q_L$ hier wiederum von der Lastpumpe 20 bestimmt und an die Steuereinrichtung 52 ausgegeben. Die Steuereinrichtung 52 bestimmt in der oben beschriebenen Weise auf Grundlage der ermittelten Größen sowie der gewünschten eingangsseitigen Lasttemperatur $T_{ref}$ die erforderliche Drehzahl n für die Versorgungspumpe 48.

Die vorangehend beschriebene Feedforward-Steuerung hat den Vorteil, dass eine schnellere Regelung erfolgen kann, da eine schnellere Anpassung des Laststromes $q_L$ möglich ist, um die eingangsseitige Lasttemperatur $T_L$ möglichst schnell auf die gewünschte eingangsseitige Lasttemperatur $T_{ref}$ zu bringen.

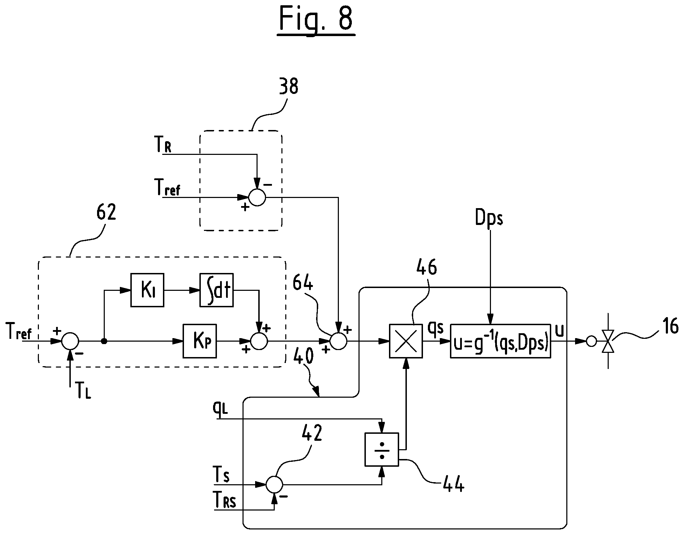

Zusätzlich zu dieser Feedforward-Regelung, welche schematisch anhand von Fig. 3 beschrieben wurde, kann, wie in Fig. 8 gezeigt ist, eine zusätzliche Feedback-Regelung für die eingangsseitige Lasttemperatur $T_L$ vorgesehen werden. Wie in Fig. 8 gezeigt, ist dazu ein zusätzlicher Feedback-Regler vorgesehen, dem als Eingangsgrößen die gewünschte eingangsseitige Lasttemperatur $T_{RS}$ sowie die tatsächliche eingangsseitige Lasttemperatur $T_L$ zugeführt werden. Das Ausgangssignal dieses Feedback-Reglers 62 wird mit dem Ausgangssignal der Feedforward-Bestimmung 38 in dem Addierer 64 addiert und dann dem Multiplizierer 46 zugeführt, über welchen in der oben beschriebenen Weise dann der gewünschte Versorgungsstrom qs bestimmt wird. Auch in diesem Beispiel wird ein Ventil 16 zur Regelung des Versorgungsstroms qs verwendet. Es ist zu verstehen, dass die Verwendung eines Feedback-Reglers 62 aber auch entsprechend mit einer Versorgungspumpe 48 in Ergänzung der in Fig. 4 gezeigten Steuerung Verwendung finden könnte.

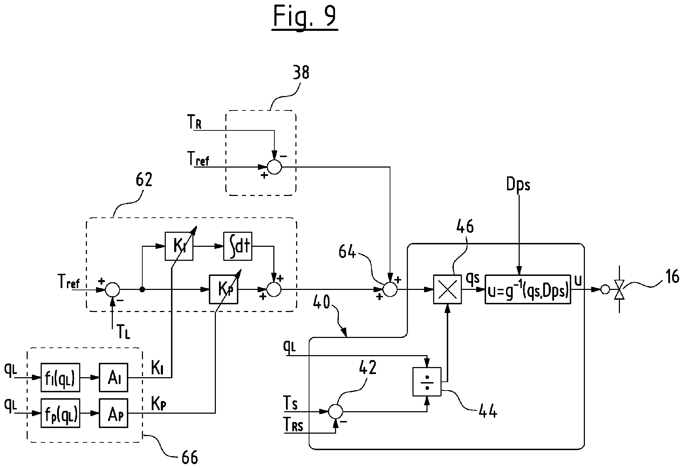

Darüber hinaus kann das Problem bestehen, dass aufgrund eines räumlichen Abstandes zwischen dem Punkt, an dem das rücklaufende Fluid und das Fluid aus der Versorgungsleitung gemischt werden, d. h. dem Mischpunkt 14 und dem Punkt, an welchem die eingangsseitige Lasttemperatur $T_L$ über den Temperatursensor 22 bestimmt wird, Verzögerungen in der Regelung auftreten. Entsprechend kann bei Verwendung eines Wärmetauschers der Abstand zwischen dem Wärmetauscher 28 und dem Temperatursensor 22 sehr groß sein. Dadurch kommt es zu einer Transportverzögerung in der Regelung. Um diese zu kompensieren können zusätzliche Korrekturfaktoren Verwendung finden. Darüber hinaus ist diese Transportverzögerung aber auch vom Laststrom $q_L$ abhängig, d. h. bei hohem Laststrom $q_L$ erreicht das am Mischpunkt 14 gemischte bzw. im Wärmetauscher 28 erwärmte Fluid den Temperatursensor 22 schneller als bei geringem Förderstrom $q_L$. Dazu kann, wie in Fig. 9 gezeigt, eine Anpassungseinrichtung 66 in Ergänzung der in Fig. 8 gezeigten Steuerung bzw. Regelung verwendet werden. In der Anpassungseinrichtung 66 werden unter der Verwendung von zwei Skalierungsfaktoren $A_I$ und $A_P$ sowie zweier Funktionen $f_I$ und $f_P$ auf Grundlage des erfassten Laststroms $q_L$ ein proportionaler Verstärkungsfaktor Kp sowie ein integraler Verstärkungsfaktor $K_I$ gebildet, welche dem Feedback-Regler 62 zugeführt werden. Dort bilden die Verstärkungsfaktoren $K_I$ und Kp Verstärkungsfaktoren eines dort verwendeten PI-Reglers, wodurch die Transportverzögerung kompensiert wird.

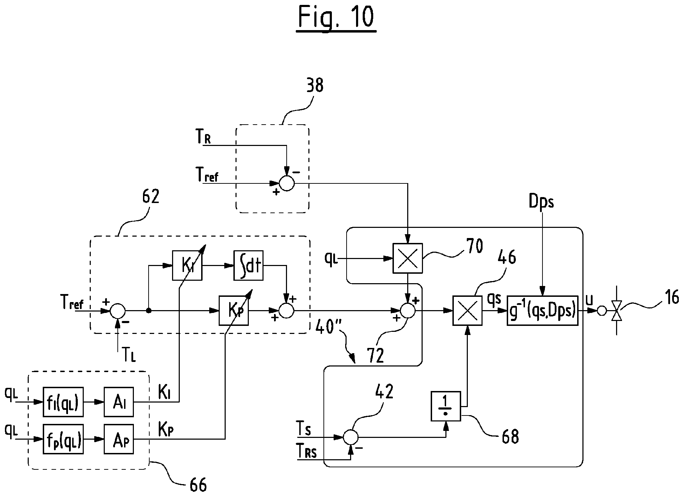

Fig. 10 zeigt eine Variante der Steuerung gemäß Fig. 9. Die Anpassungseinrichtung 66 und der Feedback-Regler 62 sowie die Feedforward-Bestimmung 38 entsprechen der vorangehenden Beschreibung, allerdings ist die Verstärkungsfaktor-Bestimmung 40" etwas anders aufgebaut. Das Ausgangssignal des Substrahierers 42 wird einem Inverter 68 zugeführt. Der Laststrom $q_L$ wird in einem Multiplizierer 70 direkt mit dem Ausgangssignal der Feedforward-Bestimmung 38 multipliziert und dann dem Addierer 72 zur Addition mit dem Ausgangssignal des Feedback-Reglers 62 zugeführt. Das Ausgangssignal des Addierers 72 wird dem Multiplizierer 46 zugeführt, wo es mit dem Ausgangssignal des Inverters 68 zur Ermittlung des gewünschten Versorgungsstroms qs multipliziert wird. Die Bestimmung der Stellgröße u für das Ventil 16 erfolgt dann in der oben beschriebenen Weise.

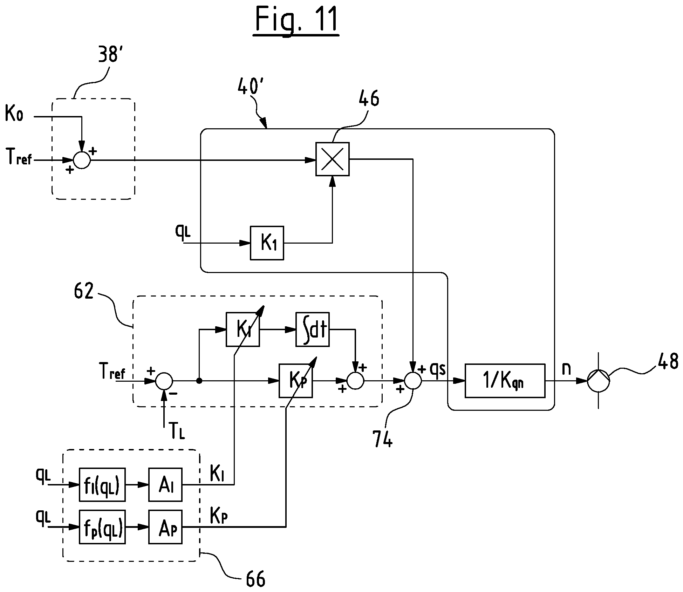

Fig. 11 zeigt eine Variante der Steuerung gemäß Fig. 6 unter Verwendung eines Feedback-Reglers 62 und einer Anpassungseinrichtung 66, wie sie vorangehend beschrieben wurde. Bei dieser wird das Ausgangssignal des Multiplizierers 46, wie er anhand von Fig. 6 beschrieben wurde, mit dem Ausgangssignal des Feedback-Reglers 62 in einem Addierer 64 addiert. Anschließend wird im Unterschied zu dem Ausführungsbeispiel gemäß Fig. 6, wie anhand von Fig. 4 beschrieben, die Drehzahl n für eine Versorgungspumpe 48 basierend auf dem am Addierer 64 bestimmten gewünschten Versorgungsstroms qs ermitteln.

Es ist zu verstehen, dass, wenn in den vorangehend beschriebenen Ausführungsbeispielen bestimmte Funktionen im Zusammenhang mit einer Versorgungspumpe 48 beschrieben wurden, diese in entsprechender Weise auch mit einem Versorgungsventil 16 verwirklicht werden könnten. Entsprechend können Funktionen, welche nur im Zusammenhang mit einem Versorgungsventil 16 beschrieben wurde, in entsprechender Weise auch mit einer Versorgungspumpe 48 realisiert werden. Ein Unterschied besteht lediglich in der Bestimmung der Drehzahl n sowie der Stellgröße u basierend auf dem ermittelten Versorgungsstrom qs.

Darüber hinaus ist zu verstehen, dass sämtliche Steuer- und Regelschritte, wie sie vorangehend beschrieben wurden, vorzugsweise in der gezeigten Steuereinrichtung 52 stattfinden. Diese stellt somit eine elektronische Steuervorrichtung für das gesamte Wärmeübertragungssystem dar.

Bezugszeichenliste

| 2 | - Lastkreis |
|---|---|
| 4 | - Versorgung |
| 6 | - Mischleitung |
| 8 | - Auslass |
| 10 | - Eingang |
| 12 | - Versorgungsleitung |
| 14 | - Mischpunkt |
| 16, 16'16" | - Ventil, bzw. Versorgungsventil |
| 18 | - Rückschlagventil |
| 20 | - Lastpumpe |
| 22,24,26,26' | - Temperatursensoren |
| 28 | - Wärmetauscher |
| 30 | - erster Strömungsweg |
| 32 | - Rücklauf |
| 34 | - zweiter Strömungsweg |
| 36 | - Temperatursensor |
| 38,38' | - Feedforward-Bestimmung |
| 40, 40', 40" | - Verstärkungsfaktor-Bestimmung |
| 42 | - Subtrahierer |
| 44 | - Dividierer |
| 46 | - Multiplizierer |
| 48 | - Versorgungspumpe |
| 50 | - Durchflussregler |
| 52 | - Steuereinrichtung |
| 54 | - Durchflussmesser |
| 56,56', 56" | - Differenzdrucksensor |
| 58,60 | - Drucksensoren |
| 62 | - Feedback-Regler |
| 64 | - Addierer |
| 66 | - Anpassungseinrichtung |
| 68 | - Inverter |
| 70 | - Multiplizierer |
| 72 | - Addierer |
| 74 | - Addierer |
| $T_{RS}$ | - gewünschte eingangsseitige Lasttemperatur |
| $T_L$ | - eingangsseitige Lasttemperatur |
| $T_{RL}$ | - ausgangsseitige Lasttemperatur |
| Ts | - Versorgungstemperatur |
| $T_{RS}$ | - ausgangsseitige Temperatur des Versorgungskreises |
| $T_R$ | - Ausgangstemperatur, entspricht TRS bei |

Mischer und TRL bei Wärmetauscher

$q_L$      - Laststrom

$q_S$      - Versorgungsstrom

Dps      - Differenzdruck

N      - Drehzahl

U      - Stellgröße

$K_o$, $K_I$      - Konstanten

$A_i$, $A_p$      - Skalierungsfaktor

$K_{qn}$      - vom Strömungswiderstand abhängiges Signal

**Patentansprüche**

1.  Steuerverfahren für ein Wärmeübertragungssystem, wobei das Wärmeübertragungssystem eine Versorgungsleitung (12), wenigstens einen Lastkreis (2) und eine Wärmeübertragungseinrichtung (6; 28) zwischen der Versorgungsleitung (12) und dem wenigstens einen Lastkreis (z) aufweist, **dadurch gekennzeichnet, dass** ein Versorgungsstrom (qs) in der Versorgungsleitung (12) basierend auf einer gewünschten eingangsseitigen Lasttemperatur ($T_{ref}$), einer tatsächlichen eingangsseitigen Lasttemperatur ($T_L$), welche in dem Lastkreis (z) erfasst wird, und einem Lastdurchfluss ($q_L$) in dem Lastkreis (z), eingestellt wird.

2.  Steuerverfahren gemäß Anspruch 1, **dadurch gekennzeichnet, dass** der Versorgungsstrom (qs) unter Verwendung einer Pumpe (48) und/oder eines Ventils (16, 16', 16") eingestellt wird.

3.  Steuerverfahren gemäß Anspruch 1 oder 2, **dadurch gekennzeichnet, dass** die Wärmeübertragungseinrichtung wenigstens einen Wärmetauscher (28) mit einem ersten Strömungsweg (30), welcher mit der Versorgungsleitung (12) verbunden ist, und einem zweiten Strömungsweg (34), welcher mit dem wenigstens einen Lastkreis (2) verbunden ist, aufweist.

4.  Steuerverfahren gemäß Anspruch 1 oder 2, **dadurch gekennzeichnet, dass** die Wärmeübertragungseinrichtung wenigstens eine Mischleitung (6) aufweist, welche einen Auslass (8) des wenigstens einen Lastkreises (2) und einen Eingang (10) des Lastkreises (2) miteinander verbindet.

5.  Steuerverfahren gemäß einem der vorangehenden Ansprüche, **dadurch gekennzeichnet, dass** Versorgungsstrom (qs) zusätzlich basierend auf einer ausgangsseitigen Lasttemperatur ($T_{RL}$; $T_{RS}$) und/oder basierend auf einer eingangsseitigen Versorgungstemperatur (Ts) eingestellt wird.

6.  Steuerverfahren gemäß einem der vorangehenden Ansprüche, **dadurch gekennzeichnet, dass** der Versorgungsstrom (qs) zusätzlich basierend auf wenigstens einer Konstante ($K_o$, $K_I$) eingestellt wird, welche vorzugsweise mit dem Laststrom ($q_L$) und/oder der gewünschten eingangsseitigen Lasttemperatur ($T_{ref}$) verknüpft ist.

7.  Steuerverfahren gemäß einem der vorangehenden Ansprüche, **dadurch gekennzeichnet, dass** der Laststrom (qs) gemäß folgender Gleichung bestimmt wird:

$$q_S = \frac{q_L}{T_{S-}T_{RS}} \cdot V$$

wobei

   $q_S$ der Versorgungsstrom,
   $q_L$ der Laststrom,
   Ts die eingangsseitige Versorgungstemperatur,
   $T_{RS}$ die ausgangsseitige Versorgungstemperatur und
   V ein Steuersignal ist.

8.  Steuerverfahren gemäß Anspruch 7, **dadurch gekennzeichnet, dass** das Steuersignal V das Ausgangssignal eines Reglers ist oder gemäß der Gleichung

$$V = T_{ref} - T_{RS}$$

oder durch Kombination dieser Gleichung mit dem Ausgangssignal eines Reglers bestimmt wird, wobei

   $T_{ref}$ die gewünschte eingangsseitige Lasttemperatur und
   $T_{RL}$ die ausgangsseitige Lasttemperatur ist.

9.  Steuerverfahren gemäß einem der vorangehenden Ansprüche, **dadurch gekennzeichnet, dass** der Versorgungsstrom (qs) durch eine Pumpe (48) eingestellt wird und eine Drehzahl n der Pumpe (48) basierend auf der folgenden Gleichung bestimmt wird:

$$n = \frac{q_S}{K_{qn}}$$

wobei

q<sub>S</sub> der Versorgungsstrom und
K<sub>qn</sub> ein zeitabhängiges Signal ist, welches vom Strömungswiderstand in der Versorgungsleitung abhängt.

10. Steuerverfahren gemäß einem der Ansprüche 2 bis 9, **dadurch gekennzeichnet, dass** zum Bestimmen der Drehzahl (n) der Pumpe (48) oder zum Bestimmen einer Öffnung (u) des Ventils (16, 16', 16") der Differenzdruck(Dps) über der Pumpe (48)oder über dem Ventil (16, 16', 16") berücksichtigt wird.

11. Steuerverfahren gemäß einem der vorangehenden Ansprüche, **dadurch gekennzeichnet, dass** bei der Einstellung des Versorgungsstroms (qs) zusätzlich eine Übertragungsverzögerung zwischen einem Messpunkt (22) der eingangsseitigen Lasttemperatur (T<sub>L</sub>) und der Wärmeübertragungseinrichtung (6; 28) durch wenigstens eine Konstante und/oder eine von dem Laststrom abhängige Funktion berücksichtigt wird.

12. Steuerverfahren gemäß einem der vorangehenden Ansprüche, **dadurch gekennzeichnet, dass** der Laststrom (q<sub>L</sub>) in dem Lastkreis (2) über eine Lastpumpe (20) bestimmt wird.

13. Wärmeübertragungssystem mit einer Versorgungsleitung, wenigstens einem Lastkreis (2), einer Wärmeübertragungseinrichtung (6; 28) zwischen der Versorgungsleitung (12) und dem wenigstens einen Lastkreis (2) und einer Versorgungsstromeinstelleinrichtung (48; 16, 16', 16"), welche den Versorgungsstrom (qs) einstellt, **dadurch gekennzeichnet, dass** die Versorgungsstromeinstelleinrichtung wenigstens eine Steuereinrichtung (52) aufweist, welche ausgebildet ist, ein Verfahren gemäß einem der vorangehenden Ansprüche auszuführen.

14. Wärmeübertragungssystem gemäß Anspruch 13, **gekennzeichnet durch** eine Sensoreinrichtung (22) zum Erfassen einer eingangsseitigen Lasttemperatur (T<sub>L</sub>) des Lastkreises und eine Sensoreinrichtung (20; 54) zum Erfassen eines Laststromes (q<sub>L</sub>) in dem Lastkreis (2) und vorzugsweise **gekennzeichnet durch** eine Temperaturerfassungseinrichtung (24, 26) zum Erfassen einer ausgangsseitigen Lasttemperatur (T<sub>R</sub>) und/oder einer eingangsseitigen Versorgungstemperatur (Ts).

15. Wärmeübertragungssystem gemäß einem der Ansprüche 13 oder 14, **dadurch gekennzeichnet, dass** die Versorgungsstromeinstelleinrichtung eine Pumpe (48) aufweist, deren Drehzahl (n) durch die Steuereinrichtung (52) eingestellt wird und/oder ein Ventil ((16, 16', 16") aufweist, dessen Öffnung (u) durch die Steuereinrichtung (52) eingestellt wird.

16. Wärmeübertragungssystem gemäß einem der Ansprüche 13 bis 15, **dadurch gekennzeichnet, dass** die Wärmeübertragungseinrichtung wenigstens einen Wärmetauscher aufweist, welcher einen ersten Strömungsweg aufweist, welcher mit der Versorgungsleitung verbunden ist, und einen zweiten Strömungsweg aufweist, welcher mit dem wenigstens einen Lastkreis verbunden ist, oder eine Mischleitung aufweist, welche die Ausgangsseite des wenigstens einen Lastkreises mit der Eingangsseite des Lastkreises verbindet.

## Claims

1. A control method for a heat transfer system, wherein the heat transfer system comprises a supply conduit (12), at least one load circuit (2) and a heat transfer device (6; 28) between the supply conduit (12) and the at least one load circuit (2),
   **characterised in that**
   a supply flow (q<sub>S</sub>) in the supply conduit (12) is set on the basis of a desired entry-side load temperature (T<sub>ref</sub>), of an actual entry-side load temperature (T<sub>L</sub>) which is detected in the load circuit (2), and of a load flow (q<sub>L</sub>) in the load circuit (2).

2. A control method according to claim 1, **characterised in that** the supply flow (q<sub>S</sub>) is set amid the use of a pump (48) and/or a valve (16, 16', 16").

3. A control method according to claim 1 or 2, **characterised in that** the heat transfer device comprises at least one heat exchanger (28) with a first flow path (30) which is connected to the supply conduit (12) and with a second flow path (34) which is connected to the at least one load circuit (2).

4. A control method according to claim 1 or 2, **characterised in that** the heat transfer device comprises at least one mixing conduit (6) which connects an outlet (8) of the at least one load circuit (2) and an entry (10) of the load circuit (2) to one another.

5. A control method according to one of the preceding claims, **characterised in that** the supply flow (q<sub>S</sub>) is set additionally on the basis of an exit-side load temperature (T<sub>RL</sub>; T<sub>RS</sub>) and/or on the basis of an entry-side supply temperature (T<sub>S</sub>).

6. A control method according to one of the preceding claims, **characterised in that** the supply flow (q<sub>S</sub>) is set additionally on the basis of at least one constant ($K_0$, $K_1$) which is preferably linked to the load flow ($q_L$) and/or to the desired entry-side load temperature ($T_{ref}$).

**7.** A control method according to one of the preceding claims, **characterised in that** the load flow (q<sub>S</sub>) is determined according to the following equation:

$$q_s = \frac{q_L}{Ts - T_{RS}} \cdot V$$

wherein

$q_S$ is the supply flow,
$q_L$ the load flow,
$T_S$ the entry-side supply temperature,
$T_{RS}$ the exit-side supply temperature and
$V$ a control signal.

**8.** A control method according to claim 7, **characterised in that** the control signal V is the output signal of a regulator or is determined according to the equation:

$$V = T_{ref} - T_{RS}$$

or by combination of this equation with the output signal of a controller, wherein

$T_{ref}$ is the desired entry-side load temperature and
$T_{RL}$ is the exit-side load temperature.

**9.** A control method according to one of the preceding claims, **characterised in that** the supply flow (q<sub>S</sub>) is set by a pump (48), and a speed n of the pump (48) is determined on the basis of the following equation:

$$n = \frac{q_s}{K_{qn}}$$

wherein

$q_S$ is the supply flow and
$K_{qn}$ a time-dependent signal which is dependent on the flow resistance in the supply conduit.

**10.** A control method according to one of the claims 2 to

**9, characterised in that** for determining the speed (n) of the pump (48) or for determining an opening (U) of the valve (16, 16', 16"), the differential pressure (Dp<sub>S</sub>) across the pump (48) or across the valve (16, 16', 16") is taken into account.

**11.** A control method according to one of the preceding claims, **characterised in that** a transfer delay between a measurement point (22) of the entry-side load temperature (T<sub>L</sub>) and the heat transfer device (6; 28) is taken into account by way of at least one constant and/or a function dependent on the load flow, on setting the supply flow (q<sub>S</sub>).

**12.** A control method according to one of the preceding claims, **characterised in that** the load flow (q<sub>L</sub>) in the load circuit (2) is determined via a load pump (20).

**13.** A heat transfer system with a supply conduit, at least one load circuit (2), a heat transfer device (6; 28) between the supply conduit (12) and the at least one load circuit (2) and with a supply flow setting device (48; 16, 16', 16") which sets the supply flow (q<sub>S</sub>), **characterised in that** the supply flow setting device comprises at least one control device (52) which is designed to carry out a method according to one of the preceding claims.

**14.** A heat transfer system according to claim 13, **characterised by** a sensor device (22) for detecting an entry-side load temperature (T<sub>L</sub>) of the load circuit, and a sensor device (20; 54) for detecting a load flow (q<sub>L</sub>) in the load circuit (2) and preferably **characterised by** a temperature detection device (24,26) for detecting an exit-side load temperature (T<sub>R</sub>) and/or an entry-side supply temperature (T<sub>S</sub>).

**15.** A heat transfer system according to one of the claims 13 or 14, **characterised in that** the supply flow setting device comprises a pump (48) whose speed (n) is set by a control device (52), and/or a valve (16, 16', 16") whose opening (U) is set by the control device (52).

**16.** A heat transfer system according to one of the claims 13 to 15, **characterised in that** the heat transfer device comprises at least one heat exchanger which comprises a first flow path connected to the supply conduit, and a second flow path connected to the at least one load circuit, or comprises a mixing conduit which connects the exit side of the at least one load circuit to the entry side of the load circuit.

**Revendications**

**1.** Procédé de commande pour un système de transfert de chaleur, dans lequel le système de transfert de chaleur présente un conduit d'alimentation (12), au moins un circuit de charge (2) et un dispositif de transfert de chaleur (6 ; 28) entre le conduit d'alimentation (12) et ledit au moins un circuit de charge (2), **caractérisé en ce qu'**un courant d'alimentation (q_S) dans le conduit d'alimentation (12) est réglé sur la base d'une température de charge côté entrée (T_ref) désirée, d'une température de charge côté entrée (T_L) effective, détectée dans le circuit de charge (2), et d'un débit de charge (q_L) dans le circuit de charge (2).

2. Procédé de commande selon la revendication 1, **caractérisé en ce que** le courant d'alimentation (q_S) est réglé en utilisant une pompe (48) et/ou une valve (16, 16', 16").

3. Procédé de commande selon la revendication 1 ou 2, **caractérisé en ce que** le dispositif de transfert de chaleur présente au moins un échangeur de chaleur (28) ayant un premier trajet d'écoulement (30) relié au conduit d'alimentation (12) et un second trajet d'écoulement (34) relié audit au moins un circuit de charge (2).

4. Procédé de commande selon la revendication 1 ou 2, **caractérisé en ce que** le dispositif de transfert de chaleur présente au moins un conduit de mélange (6) qui relie entre elles une sortie (8) dudit au moins un circuit de charge (2) et une entrée (10) du circuit de charge (2).

5. Procédé de commande selon l'une des revendications précédentes, **caractérisé en ce que** le courant d'alimentation (q_S) est réglé, en outre, sur la base d'une température de charge côté sortie (T_RL ; T_RS) et/ou sur la base d'une température d'alimentation côté entrée (T_S).

6. Procédé de commande selon l'une des revendications précédentes, **caractérisé en ce que** le courant d'alimentation (q_S) est réglé, en outre, sur la base d'au moins une constante (K_o, K_l) qui est liée, de préférence, au courant de charge (q_L) et/ou à la température de charge côté entrée (T_ref) désirée.

7. Procédé de commande selon l'une des revendications précédentes, **caractérisé en ce que** le courant de charge (q_S) est déterminé selon l'équation suivante:

$$q_s = \frac{q_L}{Ts - T_{RS}} \cdot V$$

où

q_S est le courant d'alimentation,
q_L le courant de charge,
T_S la température d'alimentation côté entrée,
T_RS la température d'alimentation côté sortie et
V un signal de commande.

8. Procédé de commande selon la revendication 7, **caractérisé en ce que** le signal de commande V est le signal de sortie d'un régulateur ou est déterminé selon l'équation:

$$V = T_{ref} - T_{RS}$$

ou bien par combinaison de cette équation avec le signal de sortie d'un régulateur, où

T_ref est la température de charge côté entrée désirée et
T_RL la température de charge côté sortie.

9. Procédé de commande selon l'une des revendications précédentes, **caractérisé en ce que** le courant d'alimentation (q_S) est réglé par une pompe (48) et une vitesse n de la pompe (48) est déterminée sur la base de l'équation suivante :

$$n = \frac{q_s}{K_{qn}}$$

où

q_S est le courant d'alimentation et
K_qn un signal dépendant du temps, qui est fonction de la résistance à l'écoulement dans le conduit d'alimentation.

10. Procédé de commande selon l'une des revendications 2 à 9, **caractérisé en ce que**, pour déterminer la vitesse (n) de la pompe (48) ou pour déterminer une ouverture (u) de la valve (16, 16', 16"), on prend en compte la pression différentielle (Dp_S) au-dessus de la pompe (48) ou au-dessus de la valve (16, 16', 16").

11. Procédé de commande selon l'une des revendications précédentes, **caractérisé en ce que**, lors du réglage du courant d'alimentation (q_S), un retard de transmission entre un point de mesure (22) de la température de charge côté entrée (T_L) et le dispositif de transfert de chaleur (6; 28) est pris en compte, en outre, par au moins une constante et/ou une fonction dépendante du courant de charge.

**12.** Procédé de commande selon l'une des revendications précédentes, **caractérisé en ce que** le courant de charge ($q_L$) dans le circuit de charge (2) est déterminé par l'intermédiaire d'une pompe de charge (20).

**13.** Système de transfert de chaleur comprenant un conduit d'alimentation, au moins un circuit de charge (2), un dispositif de transfert de chaleur (6; 28) entre le conduit d'alimentation (12) et ledit au moins un circuit de charge (2) et un dispositif de réglage du courant d'alimentation (48; 16, 16', 16") qui règle le courant d'alimentation ($q_S$), **caractérisé en ce que** le dispositif de réglage du courant d'alimentation présente au moins un dispositif de commande (52) qui est conçu pour exécuter un procédé selon l'une des revendications précédentes.

**14.** Système de transfert de chaleur selon la revendication 13, **caractérisé par** un dispositif capteur (22) pour la détection d'une température de charge côté entrée ($T_L$) du circuit de charge et un dispositif capteur (20; 54) pour la détection d'un courant de charge ($q_L$) dans le circuit de charge (2) et, de préférence, **caractérisé par** un dispositif de détection de température (24, 26) pour la détection d'une température de charge côté sortie ($T_R$) et/ou d'une température d'alimentation côté entrée (Ts).

**15.** Système de transfert de chaleur selon la revendication 13 ou 14, **caractérisé en ce que** le dispositif de réglage du courant d'alimentation présente une pompe (48) dont la vitesse (n) est réglée par le dispositif de commande (52) et/ou une valve (16, 16', 16") dont l'ouverture (u) est réglée par le dispositif de commande (52).

**16.** Système de transfert de chaleur selon la revendication 13 à 15, **caractérisé en ce que** le dispositif de transfert de chaleur présente au moins un échangeur de chaleur ayant un premier trajet d'écoulement relié au conduit d'alimentation, et un second trajet d'écoulement relié audit au moins un circuit de charge, ou ayant un conduit de mélange qui relie le côté sortie dudit au moins un circuit de charge au côté entrée du circuit de charge.

## Fig. 1a

## Fig. 1b

# Fig. 2

## Fig. 3

## Fig. 4

## Fig. 5

## Fig. 6

Fig. 7a

Fig. 7b

Fig. 7c

Fig. 7d

Fig. 7e

Fig. 7f

# Fig. 8

## Fig. 9

# Fig. 10

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0197836 A1